# EUROPÄISCHE PATENTSCHRIFT

(11) **EP 3 814 725 B1**
(45) Veröffentlichungstag und Bekanntmachung des Hinweises auf die Patenterteilung: **28.06.2023**
(21) Anmeldenummer: 19726670.3
(22) Anmeldetag: 23.05.2019
(51) Int. Cl.: G01F 1/58

(54) **MAGNETISCH-INDUKTIVES DURCHFLUSSMESSGERÄT UND EIN VERFAHREN, ZUM HERSTELLEN EINES SOLCHEN MAGNETISCH-INDUKTIVEN DURCHFLUSS-MESSGERÄTES**
MAGNETICALLY INDUCTIVE FLOWMETER AND METHOD FOR PRODUCING SUCH A MAGNETICALLY INDUCTIVE FLOWMETER
DÉBITMÈTRE À INDUCTION MAGNÉTIQUE ET PROCÉDÉ DE FABRICATION D'UN TEL DÉBITMÈTRE À INDUCTION MAGNÉTIQUE

(30) Priorität: 28.06.2018 DE 102018115629
(43) Veröffentlichungstag der Anmeldung: 05.05.2021
(73) Patentinhaber: Endress + Hauser Flowtec AG, 4153 Reinach (CH)
(72) Erfinder: SULZER, Thomas, 4058 Basel (CH); MARIAGER, Simon, 4059 Basel (CH); TRIEBENBACHER, Simon, 4147 Aesch (CH); FUCHS, Michael, 79427 Eschbach (DE)
(74) Vertreter: Penner, Paul
(86) Internationale Anmeldenummer: PCT/EP2019/063413
(87) Internationale Veröffentlichungsnummer: WO 2020/001877

(56) Entgegenhaltungen:
- DE-A1-102004 062 680
- GB-A- 726 271
- GB-A- 2 403 016
- JP-A- H01 140 022
- JP-B2- 3 177 011
- US-A- 4 499 754
- US-A- 5 280 727

## Beschreibung

Magnetisch-induktive Durchflussmessgeräte werden zur Bestimmung der Durchflussgeschwindigkeit und des Volumendurchflusses eines Mediums in einem Messrohr eingesetzt. Ein magnetisch-induktives Durchflussmessgerät umfasst eine magnetfelderzeugende Vorrichtung, die ein Magnetfeld senkrecht zur Querachse des Messrohres erzeugt. Dafür werden üblicher-weise einzelne oder mehrere Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse verlaufen. Ein an die Mantelfläche des Rohres diametral angebrachtes Messelektrodenpaar greift eine induktiv erzeugte elektrische Messspannung ab, die entsteht, wenn ein leitfähiges Medium bei angelegtem Magnetfeld in Richtung der Längsachse fließt. Da die abgegriffene Messpannung laut Faraday'schem Induktionsgesetz von der Geschwindigkeit des fließenden Mediums abhängt, kann aus der Messspannung die Durchflussgeschwindigkeit und, mit Hinzunahme eines bekannten Rohrquerschnitts, der Volumendurchfluss des Mediums ermittelt werden.

Bei leitfähigen Rohren sind Isolationsmaßnahmen erforderlich, daher werden die Innenwände üblicherweise mit einem Liner ausgekleidet oder mit einem isolierenden Kunststoff beschichtet. Für die Erdung des durch das Messrohr fließenden Mediums werden Erdungsscheiben stirnseitig an das Messrohr angebracht. Eine ungenügende Erdung kann zu Messfehlern und zur Zersetzung der Messelektroden führen.

Die EP 01186867 B1 offenbart Erdungsscheiben, die zwischen endseitig angebrachte Flansche eines magnetisch-induktiven Durchflussmessgerätes und Flansche der Rohrleitungen eingespannt sind. Die JP 3 177011 B2 offenbart Erdungsringe, die derart im Inneren des Messrohres angeordnet sind, insbesondere im Liner eingebettet sind, dass sie nicht in Kontakt mit dem geerdeten Trägerrohr stehen.

Aus der DE 102009002053 A1 ist ein magnetisch-induktives Durchflussmessgerät bekannt, bei dem die Erdung durch eine mit einem elektrisch leitfähigen Material beschichtete Flanschscheibe realisiert ist.

Die DE 102005044677 A1 offenbart ein magnetisch-induktives Durchflussmessgerät mit einem aus einem elektrisch leitfähigen Kunststoff geformten Ring, der einstückig an die isolierende Innenschicht des Messrohres angeformt ist und die Funktion einer Dichtung und Erdungsscheibe übernimmt.

Aus der US 4507975 geht ein magnetisch-induktives Durchflussmessgerät mit einem Keramikmessrohr hervor, dass innenseitige Erdungselektroden aufweist, die mittels Aufbringen und Einbrennen einer Platinpaste realisiert sind.

Aus der US 4,499,754 geht ein magnetisch-induktives Durchflussmessgerät mit einem Messrohr hervor, dass innenseitige Erdungselektroden aufweist, die aus einem dem elektrisch isolierenden Linermaterial beigemischten Kohlenstoffpulver gebildet sind.

JP H01 140022 A lehrt ein magnetisch-induktives Durchflussmessgerät mit elektrisch isolierenden Messrohren, bei denen die Erdung über metallisiertw Endbereiche erfolgt. Diesen Ausgestaltungen nachteilig ist jedoch, dass massive Erdungsscheiben zum Einen teuer sind und zum Anderen zur Beschädigung der Messrohrbeschichtung beitragen. Weiterhin, sind die bereits bekannten Verfahren zum Aufbringen von Erdungselektroden in das Messrohr mit hohen Temperaturen verbunden, was sich schädlich auf das Messrohr und/oder auf die isolierende Beschichtung auswirkt.

Ausgehend von dem dargelegten Stand der Technik liegt der vorliegenden Erfindung die Aufgabe zugrunde, ein magnetisch-induktives Durchflussmessgerät bereitzustellen, mit einer alternativen Lösung für die Erdung des Mediums.

Die Aufgabe wird erfindungsgemäß durch das magnetisch-induktive Durchflussmessgerät gemäß dem Anspruch 1 gelöst.

Ein erfindungsgemäßes magnetisch-induktives Durchflussmessgerät umfasst ein Messrohr zum Führen eines Mediums, eine magnetfelderzeugende Vorrichtung und mindestens zwei Messelektroden zum Erfassen einer induktiv erzeugten Messspannung im Medium und umfasst ferner eine im Messrohr innenseitig selektiv applizierte leitfähige Beschichtung zur Bildung eines galvanischen Kontaktes zum Medium.

Durch das selektive Applizieren der leitfähigen Beschichtung in das Messrohr-innere, kann auf massive Erdungsscheiben verzichtet werden. Mittels der selektiv applizierten Beschichtung kann ein Potentialausgleich zwischen dem Potential der Rohrleitung und des Mediums realisiert werden, was insbesondere dann notwendig ist, wenn das Messrohr eine innenseitige, isolierende Beschichtung oder einen Liner aufweist. Dadurch, dass die leitfähige Beschichtung von dem Medium benetzbar ist, kann entweder ein in dem Medium vorliegendes Potential, also ein Referenzpotential, gemessen werden oder ein Potentialausgleich zwischen dem Potential des Mediums und einem Referenzpotential, insbesondere einem Massepotential oder Erd-potential, erfolgen. Mit dem Ersetzen der massiven Erdungsscheibe durch eine dünne selektiv applizierte Beschichtung kann eine Erdung des Mediums bereits mit geringen Mengen an Elektrodenmaterial realisiert werden. Weiterhin kann auf die Ausrichtung oder das Arretieren der Erdungsscheibe verzichtet werden.

Weiterhin ist die leitfähige Beschichtung ringförmig ausgebildet, wobei die leitfähige Beschichtung eine Ringdicke *d* und eine Ringbreite *b* aufweist.

Ringförmig applizierte Erdungselektroden im Innern des Messrohres, die für die Erdung des fließenden Mediums verantwortlich sind, benötigen keine externe Verbindung mit einem Masse- oder Erdpotential. Auf eine Kontaktierung mit einer externen Masse mittels eines Kabels kann somit verzichtet werden, was somit zu einer Reduktion von möglichen Störquellen führt und die Herstellung vereinfacht. Für eine ausreichende Erdung sind Erdungselektroden eine minimale Ringbreite *b* größer/gleich 2 cm für Messrohre mit einer Nennweite *D* größer/gleich 300 mm notwendig.

Weiterhin hat das Messrohr eine Länge *l* und eine Nennweite *D* mit *D* ≥ *DN*300, wobei *b* ≥ *c · D*²/*l*, und 0,05 ≤ *c* ≤ 0,25 und bevorzugt 0,10 ≤ *c* ≤ 0,20 gilt.

Der Parameter c hängt vom Aufbau des Magnetsystems ab. Typische Werte für *c* liegen zwischen 0,05 und 0,25. Für Messrohre mit einer großen Nennweite gilt üblicherweise *l* ≈ *D,* so dass die Ungleichung vereinfacht durch *b* ≥ *c · l* dargestellt werden kann. Vorteilhafte Ausgestaltungen der Erfindung sind Gegenstand der Unter-ansprüche. Gemäß einer Ausgestaltung umfasst die leitfähige Beschichtung ein leitfähiges Polymer und/oder ein Metall und/oder ein leitfähiges Lacksystem und/oder eine leitfähige Pulverbeschichtung.

Als Elektrodenmaterialien werden vorzugsweise Edelstähle, CrNi-Legierungen, ZnAI-Legierungen, Platin oder Titan verwendet. Für Anwen-dungen bieten sich insbesondere die rostfreien Edelstähle 1.4435 und 1.4462 an.

Gemäß einer Ausgestaltung ist die leitfähige Beschichtung eingangs und ausgangs des Messrohres selektiv appliziert.

Die Erfindung beschränkt sich aber nicht nur auf einen einzelnen Ring an den jeweiligen Enden des Messrohres. Die Erdungselektroden können jede beliebige Struktur annehmen und auch aus mehreren unabhängigen Strukturen bestehen. Beispielsweise aus einer Vielzahl an Ringen, die in einem festen oder variablen Abstand zueinander appliziert sind.

Gemäß einer Ausgestaltung weist die leitfähige Beschichtung eine Leitfähigkeit *S*₁ auf, wobei für die Leitfähigkeit *S*₁ gilt, dass *S*₁ ≥ 10⁶ *S*/*m*, insbesondere *S*₁ ≥ 5 · 10⁶ *S*/*m* und bevorzugt *S*₁ ≥ 1 · 10⁷ *S*/*m.*

Es ist von Vorteil, wenn die Leitfähigkeit der leitfähigen Beschichtung *S*₁ mindestens 1 000mal so groß ist wie eine Leitfähigkeit des Mediums *S*₂, insbesondere 2000mal so groß und bevorzugt 5000mal so groß. Diese Mindestanforderung ist insbesondere für leitfähige Beschichtungen aus leitfähigen Polymeren notwendig, da diese üblicherweise eine Leitfähigkeit aufweisen, die geringer als 10⁶ *S*/*m* ist.

Gemäß einer Ausgestaltung umfasst das Messrohr ein leitfähiges Rohr mit einem elektrisch-isolierenden Liner oder einer isolierenden Beschichtung.

Es ist von Vorteil, wenn das Rohr ein Metallrohr, insbesondere ein Stahlrohr, ist.

Es ist von Vorteil, wenn die isolierende Beschichtung oder das Linermaterial ein ungesättigter Polyesterharz, Polyesterharz, Epoxidharz, Vinylesterharz, Naturkautschuk, Polyurethan, bevorzugt ein trinkwassertaugliches Polyurethan, Weichgummi, Hartgummi und/oder fluorhaltige Kunststoffe, wie z.B. PFA oder PTFE umfasst. Diese Materialien besitzen einerseits eine gute mechanische Festigkeit als auch andererseits eine gute Diffusionsdichtigkeit um ein diffusionsbedingtes Unterwandern des Liners durch das Medium oder ein Aufquellen des Linermaterials und damit eine Verengung des Rohrquerschnitts zu verhindern. Der Liner kann aber auch einen Verbund-werkstoff, beispielsweise ein Naturfaserverbundstoff, insbesondere ein Holz-Kunststoff-Verbundwerkstoff oder ein Naturfaserkunststoff umfassen. Diese Verbundwerkstoffe, insbesondere der mit Naturfasern verstärkte Kunststoff Polypropylen PP-NF, weisen besonders für die Fertigung von Messeinrichtungen geeignete Materialeigenschaften auf.

Gemäß einer Ausgestaltung ist die leitfähige Beschichtung auf dem Liner oder der isolierenden Beschichtung appliziert.

Gemäß einer Ausgestaltung ist das leitfähige Rohr nur teilweise mit dem Liner oder der isolierenden Beschichtung ausgekleidet, wobei die leitfähige Beschichtung auf den freiliegenden Bereich appliziert ist.

Die selektive Beschichtung des Rohres mit einer isolierenden Schicht kann beispielsweise durch ein Abdecken der frei zu bleibenden Bereiche mit Klebeband oder durch das Anbringen von Schalungselementen realisiert werden. In einem weiteren Applizierschritt wird dann die leitfähige Beschichtung selektiv auf die freiliegenden Bereiche aufgebracht. Dabei dient die leitfähige Beschichtung zusätzlich als Korrosionsschutz zur Vermeidung von Rohrschäden.

Gemäß einer Ausgestaltung umfasst das Messrohr ein isolierendes Rohr, insbesondere ein Glasrohr oder ein Keramikrohr oder bevorzugt ein Kunst-stoffrohr.

Das Magnetfeld kann störungsfrei in ein Kunststoffrohr einkoppeln. Zudem werden durch das Messrohr aus Kunststoff niedrige Herstellungskosten erreicht, da u.a. Arbeitsschritte und Materialkosten eingespart werden, da das Auskleiden eines bspw. metallischen Rohres mit einer isolierenden Schicht oder einem Liner entfällt.

Insbesondere bei Rohren aus isolierenden Materialien kann eine Erdung des Mediums nicht über das Rohr erfolgen. Mit der erfindungsgemäßen Lösung kann die Erdungselektrode direkt innenseitig in das isolierende Rohr appliziert werden. Es ist keine zusätzliche massive Erdungsscheibe zwischen dem Messrohr und der Rohrleitung notwendig, somit auch kein Arretieren und Orientieren der Erdungsscheibe. Somit fällt eine mögliche Fehlerquelle bei der Montage des Messrohres weg.

Gemäß einer Ausgestaltung ist stirnseitig vom Messrohr jeweils ein Flansch angebracht, wobei sich die leitfähige Beschichtung zumindest teilweise auf den Flansch erstreckt.

Die Flansche der angrenzenden Rohrleitungen werden bspw. über Distanzbolzen mit den Flanschen des Messrohres verbunden, und das zwischen den Rohrleitungen eingebrachte Durchflussmessgerät dadurch eingespannt. Durch das Applizieren der Erdungselektrode auf den Flansch des Messrohres, kann die Kontaktierung der Erdungselektrode über den Flansch realisiert werden, wodurch das Erdungskabel nicht in das Messrohr hineingeführt werden muss.

Gemäß einer Ausgestaltung ist die leitfähige Beschichtung mittels eines Kabels und/oder eines Bleches und/oder durch Erdung des leitfähigen Rohres auf ein Massepotential gelegt.

Ein Verfahren zum selektiven Applizieren einer leitfähigen Beschichtung in ein Messrohr des erfindungsgemäßen magnetisch-induktiven Durchflussmessgerätes mittels eines rotierenden Beschichtungsverfahrens, ist gekennzeichnet durch die Schritte A) bis G):
A) Positionieren eines ersten Gieß- oder Sprühkopfes, insbesondere eines Kaltplasmakompatiblen Sprühkopfes, in das Messrohr;
B) Rotieren des Messrohres;
C) Applizieren der isolierenden Beschichtung;
D) Positionieren eines zweiten Gieß- oder Sprühkopfes, insbesondere eines Kaltplasmakompatiblen Sprühkopfes, in das Messrohr;
E) Rotieren des Messrohres;
F) Selektives Applizieren der leitfähigen Beschichtung;
G) Optionales Wiederholen der Verfahrensschritte A) bis F).

Das Ribbon-Flow-Verfahren findet bereits Anwendung bei der Auskleidung von Rohren mit einer isolierenden Beschichtung. Hierbei wird das isolierende Material mittels eines Applikatorkopfes auf die Innenfläche eines rotierenden Rohres gleichmäßig aufgetragen. Es ist daher vorteilhaft, dieses bereits etablierte Verfahren bei der innenseitigen Auftragung des leitfähigen Materials zu nutzen. Dieses Verfahren ist jedoch ausschließlich für flüssige Materialien, wie beispielsweise Polymere, geeignet.

Das Kaltplasmaverfahren bietet sich insbesondere dann an, wenn das Elektrodenmaterial fest bzw. eine hohe Schmelztemperatur aufweist. Beim Kaltplasmaverfahren handelt es sich um ein Oberflächenbeschichtungs-verfahren, bei dem die Oberfläche einer vergleichsweise geringen thermischen Belastung ausgesetzt ist. Daher eignet sich dieses Verfahren zur Oberflächenbehandlung von Bauteilen aus unterschiedlichsten Materialien, insbesondere von Kunststoffen oder dünnen Kunstoffbeschichtungen. Mithilfe eines beweglichen Sprühkopfes kann das Elektrodenmaterial selektiv appliziert werden, was eine Vielfalt an Elektrodenformen ermöglicht.

Gemäß einer Ausgestaltung wird mindestens ein Bereich des Rohres durch mindestens ein Schalungselement abgegrenzt und/oder einen Film abgedeckt, wobei das Schalungselement und/oder der Film verhindern, dass das Rohr in dem Bereich durch die in Schritt C) applizierte isolierende Beschichtung beschichtet wird, wobei das Schalungselemente und/oder der Film nach Schritt C) entfernt wird, wobei der Bereich in Schritt F) mit der leitfähigen Beschichtung gefüllt wird.

Die Erfindung wird anhand der nachfolgenden Figuren näher erläutert. Es zeigt:
Fig. 1: ein Rohrquerschnitt eines magnetisch-induktiven Durchflussmess-gerätes nach dem Stand der Technik;
Fig. 2: einen Rohrlängsschnitt eines leitfähigen Rohres, das mit einem isolierenden Liner versehen ist, auf dem eine leitfähige Beschichtung als Erdungselektrode appliziert ist, wobei die Beschichtung über ein Kabel mit einem Erdungspotential verbunden ist;
Fig. 3: einen Rohrlängsschnitt eines leitfähigen Rohres, das mit einem Flansch und stellenweise mit einem isolierenden Liner versehen ist, wobei die freiliegenden Bereiche mit einer leitfähigen Beschichtung versehen sind, die sich auf die Flansche erstreckt;
Fig. 4: einen Rohrlängsschnitt eines leitfähigen Rohres, das stellenweise mit einem isolierenden Liner und einer leitfähigen Beschichtung versehen ist;
Fig. 5: einen Rohrlängsschnitt eines leitfähigen Rohres, das mit einer Flanschscheibe und einem isolierenden Liner versehen ist, auf dem eine leitfähige Beschichtung appliziert ist, die sich auf den Flansch erstreckt;
Fig. 6: einen Rohrlängsschnitt eines leitfähigen Rohres, ein Sprühkopf zum Applizieren des Elektrodenmaterials und Schalungselemente zum Abgrenzen von frei zu bleibenden Bereichen; und
Fig. 7: einen Rohrlängsschnitt eines leitfähigen Rohres, umfassend zwei Messelektroden, einen Liner und eine ringförmig applizierte Erdungselektrode mit Bemaßungen.

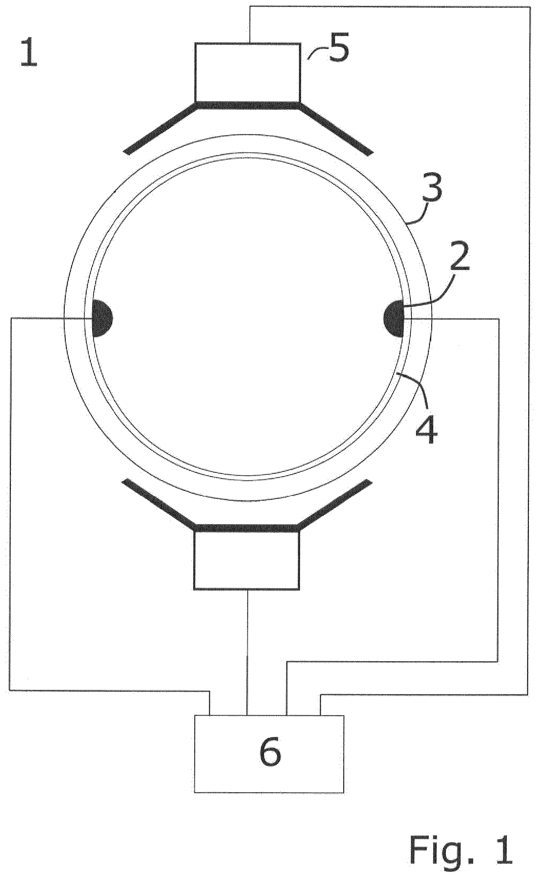

Der Aufbau und das Messprinzip eines magnetisch-induktiven Durchfluss-messgerätes ist grundsätzlich bekannt. Fig. 1 zeigt einen schematischen Rohrquerschnitt (13) eines bekannten magnetisch-induktiven Durchflussmess-gerätes. Durch ein Messrohr (1) wird ein Medium geleitet, das eine elektrische Leitfähigkeit aufweist. Eine magnetfelderzeugende Vorrichtung (5) ist so angebracht, dass sich die Magnetfeldlinien senkrecht zu einer durch die Messrohrachse definierten Längsrichtung orientieren. Als magnetfeld-erzeugende Vorrichtung (5) eignet sich vorzugsweise eine Sattelspule oder ein Polschuh mit aufgesetzter Spule. Das beispielsweise durch einen Elektromagneten aufgebaute Magnetfeld wird durch einen getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit. Bei angelegtem Magnetfeld entsteht im Messrohr (1) eine Potentialverteilung, die mit zwei an der Innenwand des Messrohres (1) angebrachten Messelektroden (2) abgegriffen und an eine Auswerteeinheit (6) weitergeleitet wird. In der Regel sind die Messelektroden (2) diametral angeordnet und bilden eine Elektrodenachse, die senkrecht zu den Magnetfeldlinien und der Längsrichtung verläuft. Anhand der gemessenen Messspannung kann, unter Berücksichtigung der magnetischen Flussdichte, die Durchflussgeschwindigkeit und, unter Berücksichtigung der Rohr-querschnittsfläche, der Volumendurchfluss des Mediums bestimmt werden. Um das Ableiten der an den Messelektroden (2) anliegenden Messspannung über das Rohr (3) zu verhindern, wird die Innenwand mit einem isolierenden Material, beispielsweise einem Liner (4), ausgekleidet. An den Stirnseiten angebrachte Erdungsscheiben dienen dazu, das durch das Messrohr fließende Medium zu erden. Die Erdungsscheiben bestehen üblicherweise aus Metall, sind somit massiv und mittels einem Massekabel an ein Referenzpotential, insbesondere ein Massepotential oder Erdpotential, elektrisch angeschlossen.

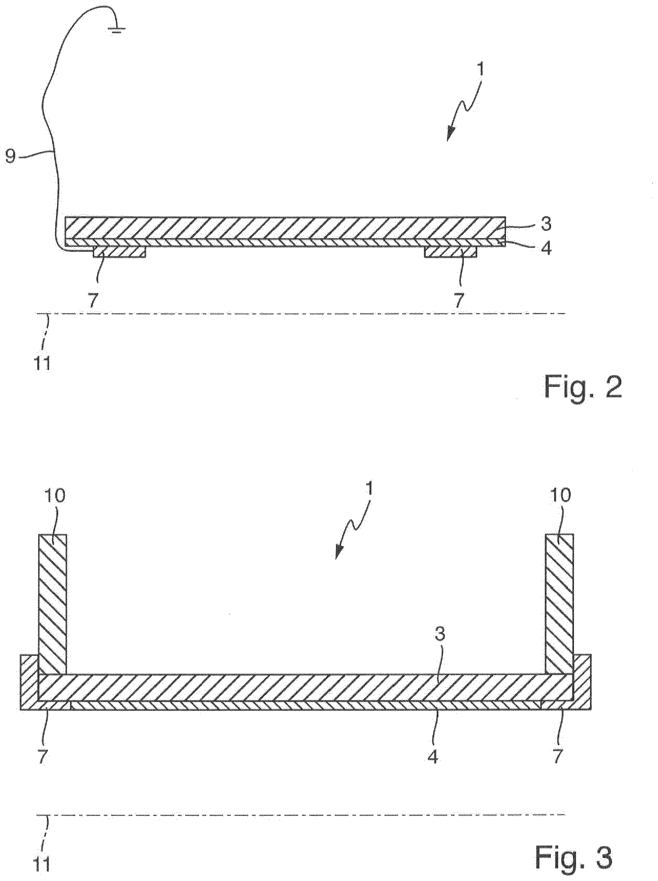

Erfindungsgemäß werden die Erdungselektroden in das Messrohr (1) selektiv appliziert und als dünne Beschichtung ausgebildet. Die erfindungsgemäßen Ausführungsformungen sind in Fig. 2 bis Fig. 6 illustriert.

Fig. 2 zeigt einen Ausschnitt eines Messrohres (1), das rotationssymmetrisch zur fixen Rotationsachse (11) ist. Das Rohr (3) ist elektrisch leitfähig und mit einem elektrisch isolierenden Liner (4) ausgekleidet. Die Erdungselektrode (7) ist in Form einer Ringstruktur auf den Liner appliziert. Ein Erdungskabel (9) verbindet die Erdungselektrode mit einem Erdpotential.

Fig. 3 zeigt einen Ausschnitt eines Messrohres (1), das rotationssymmetrisch zur fixen Rotationsachse (11) ist. Das Rohr (3) ist elektrisch leitfähig und nur stellenweise mit einem elektrisch isolierenden Liner (4) ausgekleidet. Die selektiv applizierte, leitfähige Beschichtung (7) ist direkt auf den freiliegenden Bereichen des Rohres (3) appliziert und bildet somit einen direkten Kontakt zum Rohr (3). Weiterhin erstrecken sich die Erdungselektroden auf die stirnseitig angebrachten Flansche (10).

Es ist von Vorteil, wenn sich die leitfähige Beschichtung (7) auf die Flansche (10) erstreckt. Dadurch kann auf das Einbringen eines Erdungskabels (9) in das Messrohr (1) verzichtet werden und die Erdung der Erdungselektrode (7) kann über die Flansche (10) erfolgen.

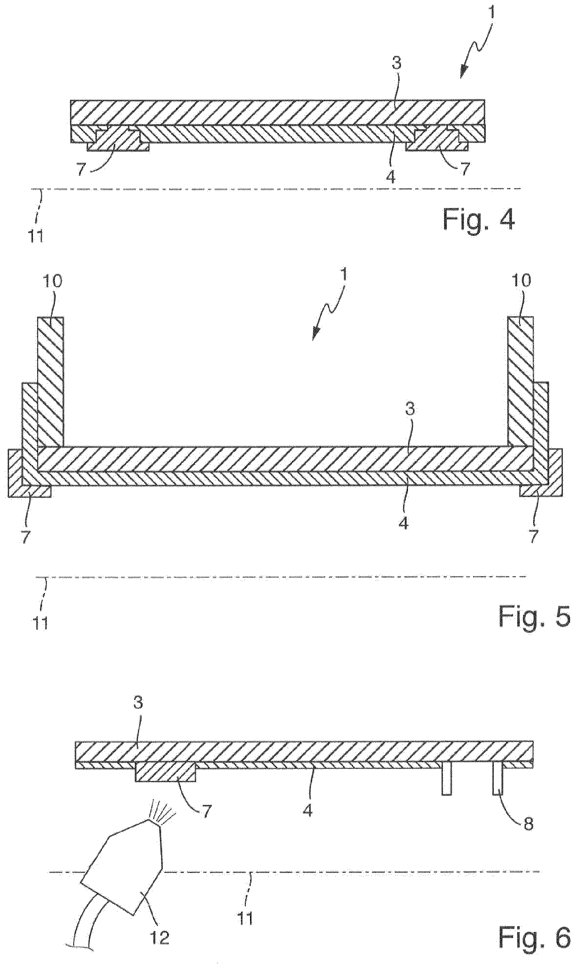

Fig. 4 zeigt einen Ausschnitt eines Messrohres (1), das rotationssymmetrisch zur fixen Rotationsachse (11) ist. Das Rohr (3) ist elektrisch leitfähig und teilweise mit einem elektrisch isolierenden Liner (4) ausgekleidet. Dabei wird der Liner (4) in zwei Applizierschritten aufgebracht, wobei bei beiden Applizierschritten Bereiche abgedeckt sind. Abhängig von der gewünschten Elektrodenform kann die Beschichtung des Rohres (3) mit dem isolierenden Beschichtung (4) auch mehr als zwei Applizierschritte umfassen. Die freigelegten Bereiche werden in einem weiteren Applizierschritt mit dem leitfähigen Elektrodenmaterial gefüllt. Somit ist die selektiv applizierte leitfähige Beschichtung (7) in direktem Kontakt mit dem Rohr (3).

Gemäß dieser Ausgestaltung sind zwar mehrere Applizierschritte notwendig, dadurch ist jedoch ein direktes Kontaktieren der Erdungselektroden (7) mittels eines Erdungskabels (9) nicht notwendig. Die Erdungselektroden (7) sind im elektrischen Kontakt mit dem Potential des Rohres (3). Dadurch muss kein Erdungskabel (9) in das Messrohr (1) eingeführt werden, wodurch die Installation des Messrohres (1) in eine Rohrleitung vereinfacht wird. Das Erdungsmaterial dient außerdem als Korrosionsschutz um Schäden am Rohr (3) zu vermeiden.

Fig. 5 zeigt einen Ausschnitt eines Messrohres (1), das rotationssymmetrisch zur fixen Rotationsachse (11) ist. Das Rohr (3) ist elektrisch leitfähig und mit einem elektrisch isolierenden Liner (4) und zwei selektiv applizierten Erdungselektrode (7) ausgekleidet, die sich auf den stirnseitig angebrachten Flanschen (10) erstrecken.

Fig. 6 zeigt einen Ausschnitt eines Messrohres (1), das rotationssymmetrisch zur fixen Rotationsachse (11) ist. Das Messrohr weist Schalungselemente (8) auf und einen Sprühkopf (12), der die freigelegten Bereiche mit Elektroden-material beschichtet bzw. auffüllt.

Gemäß dieser Ausgestaltung sorgen Schalungselemente (8) dafür, dass das Messrohr (1) nur teilweise mit der isolierenden Beschichtung beschichtet wird. Die Schalungselemente (8) sind besonders dann vorteilhaft, wenn die isolierende Beschichtung (4) eine geringe Viskosität aufweist. Die Schalungs-elemente (8) dienen in dem Fall als Barriere. Die freien Stellen werden dann in einem weiteren Verfahrensschritt mit dem Elektrodenmaterial gefüllt. Die leitfähige Beschichtung (7) dient zusätzlich als Korrosionsschutz für das Rohr (3) und kann über das Rohr (3) kontaktiert werden. Dadurch erspart man sich eine umständige Kontaktierung über ein Massekabel (9), das in das Rohrsystem eingebracht werden muss.

Für das Applizieren der leitfähigen Beschichtung (7) bieten sich bevorzugt zwei Verfahren an. Zum einen bietet sich das bereits etablierte Ribbon-Flow Verfahren zur Applizierung der leitfähigen Beschichtung (7) an, insbesondere dann, wenn die leitfähige Beschichtung (7) ringförmig appliziert werden soll, wenn das Elektrodenmaterial in einem flüssigen Zustand vorliegt und/oder wenn ein Wechsel des Beschichtungsverfahrens bei der innenseitigen Verkleidung der Rohre (3) unerwünscht ist. Das zweite bevorzugte Verfahren basiert auf einem Kaltplasmaverfahren. Mit diesem Verfahren können Metallschichten auf das Rohr (3) und/oder den Liner bzw. der isolierenden Beschichtung (4) appliziert werden, ohne diese thermisch zu belasten. Weiterhin können durch die Wahl eines beweglichen Sprühkopfes (12) Erdungselektroden (7) mit beliebiger Form hergestellt werden. Weiterhin kann der Kaltplasma-kompatible Sprühkopf (12) in einen bereits vorhandenen Ribbon-Flow Setup eingebaut werden. Somit lässt sich die leitfähige Beschichtung (7) mittels des Kaltplasmaverfahrens problemlos in die Ribbon-Flow Verfahrens-abläufe integrieren. Es kann aber auch jedes weitere beliebige Verfahren, das für Lack- und Pulverbeschichtungen geeignet ist, für die Applizierung der leitfähigen Beschichtung (7) angewendet werden.

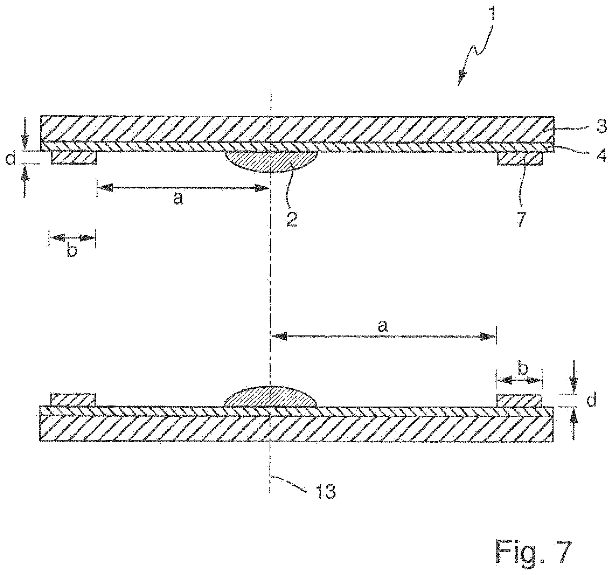

Fig. 7 zeigt ein Messrohr (1) mit einer Bemaßung der Erdungselektroden (7). Die Erdungselektrode (7) weist eine Schichtdicke *d*, eine Ringbreite *b* und einen Abstand *a* zum Rohrquerschnitt (13) auf, der durch die Mitte der beiden Messelektroden (2) verläuft.

Für Messrohre (1) mit einer Nennweite *D* von mindestens 300 mm ist eine Ringbreite *b* von mindestens 2 cm vorteilhaft. Dadurch kann sichergestellt werden, dass die Erdungselektrode (7) eine ausreichende Leitfähigkeit aufweist, um die Ladungen im Medium abzuleiten.

Es sind auch magnetisch-induktive Durchflussmessgeräte mit isolierenden Rohren (3), insbesondere aus PET oder Keramik, bekannt. Erfindungsgemäße Ausführungsformen, umfassend ein isolierendes Rohr (3) und eine selektiv applizierte, leitfähige Beschichtung (7), sind zwar nicht in den Figuren abgebildet, sind aber Umfang des Schutzbereiches.

Es ist vorteilhaft vor dem Auftrag der leitfähigen Beschichtung (7) die zu beschichtende Oberfläche zu behandeln, um ein besseres Anhaften zu ermöglichen. Dies kann chemisch durch Anätzen erfolgen oder durch Coronabestrahlen oder Lasern oder durch abrasive Verfahren wie z.B. Sandstrahlen.

### Bezugszeichenliste

- 1: Messrohr
- 2: Messelektroden
- 3: Rohr
- 4: Liner
- 5: magnetfelderzeugende Vorrichtung
- 6: Auswerteeinheit
- 7: Erdungselektrode
- 8: Schalungselement
- 9: Erdungskabel
- 10: Flansch
- 11: Rotationsachse
- 12: Sprühkopf
- 13: Rohrquerschnitt

## Patentansprüche

1. Magnetisch-induktives Durchflussmessgerät, umfassend ein Messrohr (1) zum Führen eines Mediums, eine magnetfelderzeugende Vorrichtung (5) und mindestens zwei Messelektroden (2) zum Erfassen einer induktiv erzeugten Messspannung im Medium,
eine im Messrohr (1) innenseitig selektiv applizierte leitfähige Beschichtung zur Bildung eines galvanischen Kontaktes zum Medium und zur Bildung einer Erdungselektrode (7),
wobei die leitfähige Beschichtung ringförmig ausgebildet ist,
wobei die leitfähige Beschichtung eine Ringdicke d und eine Ringbreite *b* aufweist. **dadurch gekennzeichnet, dass** das Messrohr (1) eine Länge *l* und eine Nennweite *D* mit *D* ≥ *DN*300 hat, dass *b* ≥ *c* · *l*,
und 0,05 ≤ *c* ≤ 0,25 gilt.

2. Durchflussmessgerät nach einem der vorherigen Ansprüche,
wobei die leitfähige Beschichtung ein leitfähiges Polymer und/oder ein Metall und/oder ein Lacksystem und/oder eine Pulverbeschichtung umfasst.

3. Durchflussmessgerät nach einem der vorherigen Ansprüche,
wobei die leitfähige Beschichtung eingangs und ausgangs des Messrohres (1) selektiv appliziert ist.

4. Durchflussmessgerät nach einem der vorherigen Ansprüche,
wobei die leitfähige Beschichtung eine Leitfähigkeit *S*₁ aufweist,
wobei für die Leitfähigkeit *S*₁ gilt, dass *S*₁ ≥ 10⁶ *S*/*m,* insbesondere *S*₁ ≥ 5 · 10⁶ *S*/*m* und bevorzugt *S*₁ ≥ 10⁷ *S*/*m.*

5. Durchflussmessgerät nach einem der vorherigen Ansprüche,
wobei das Messrohr (1) ein leitfähiges Rohr mit einem Liner (4) oder einer isolierenden Beschichtung umfasst.

6. Durchflussmessgerät nach Anspruch 5,
wobei die leitfähige Beschichtung auf dem Liner (4) oder die isolierende Beschichtung appliziert ist.

7. Durchflussmessgerät nach Anspruch 6,
wobei das leitfähige Rohr nur teilweise mit dem Liner (4) oder der isolierenden Beschichtung beschichtet ist, wobei die leitfähige Beschichtung auf den freiliegenden Bereichen des Rohres appliziert ist.

8. Durchflussmessgerät nach einem der Ansprüche 1 bis 5,
wobei das Messrohr (1) ein isolierendes Rohr umfasst, insbesondere ein Glasrohr oder ein Keramikrohr oder bevorzugt ein Kunststoffrohr.

9. Durchflussmessgerät nach einem der vorherigen Ansprüche,
wobei stirnseitig vom Messrohr (1) jeweils ein Flansch (10) angebracht ist, wobei sich die leitfähige Beschichtung zumindest teilweise auf den Flansch (10) erstreckt.

10. Durchflussmessgerät nach einem der vorherigen Ansprüche,
wobei die leitfähige Beschichtung mittels eines Kabels (9) und/oder eines Bleches und/oder durch Erdung des leitfähigen Rohres auf elektrische Masse gelegt ist.

## Claims

1. Electromagnetic flowmeter comprising
- a measuring tube (1) designed to conduct a medium,
- a unit for generating magnetic fields (5) and
- at least two measuring electrodes (2) designed to measure a measuring voltage generated by induction in the medium,
- a conductive layer applied selectively on the inside of the measuring tube (1) to form a galvanic contact with the medium and to form a grounding electrode (7), wherein the conductive layer has an annular shape,
wherein the conductive layer has an annular thickness *d* and an annular width *b*, **characterized in that** the measuring tube (1) has a length *l* and a nominal diameter *D* with *D* ≥ *DN300,* such that *b* ≥ *c* - *l* and *0.05* ≤ *c* ≤ *0.25* applies.

2. Flowmeter as claimed in one of the previous claims,
wherein the conductive layer comprises a conductive polymer and/or a metal and/or a paint system and/or a powder layer.

3. Flowmeter as claimed in one of the previous claims,
wherein the conductive layer is applied selectively at the inlet and at the outlet of the measuring tube (1).

4. Flowmeter as claimed in one of the previous claims,
wherein the conductive layer has a conductivity S*₁*,
wherein the conductivity S*₁* is such that S*₁* ≥ *10⁶ S*/*m,* particularly S*₁* ≥ *5* • *10⁶ S*/*m* and preferably *S₁* ≥ *10⁷ S*/*m.*

5. Flowmeter as claimed in one of the previous claims,
wherein the measuring tube (1) has a conductive tube with a liner (4) or an isolating layer.

6. Flowmeter as claimed in Claim 5,
wherein the conductive layer is applied to the liner (4) or the isolating layer.

7. Flowmeter as claimed in Claim 6,
wherein the conductive tube is only partially lined with the liner (4) or the isolating layer, wherein the conductive layer is applied to the exposed parts of the tube.

8. Flowmeter as claimed in one of the Claims 1 to 5,
wherein the measuring tube (1) comprises an isolating tube, particularly a glass tube or a ceramic tube, or preferably a plastic tube.

9. Flowmeter as claimed in one of the previous claims,
wherein a flange (10) is mounted on each front face of the measuring tube (1), wherein the conductive layer extends at least partially on the flange (10).

10. Flowmeter as claimed in one of the previous claims,
wherein the conductive layer is connected to ground by means of a cable (9) and/or a plate and/or by grounding the conductive tube.

## Revendications

1. Débitmètre électromagnétique comprenant
- un tube de mesure (1) destiné à guider un produit,
- un dispositif générateur de champ magnétique (5) et
- au moins deux électrodes de mesure (2) destinées à acquérir une tension de mesure générée par induction dans le produit,
- un revêtement conducteur appliqué sélectivement à l'intérieur du tube de mesure (1) pour former un contact galvanique avec le produit et pour former une électrode de mise à la terre (7),
le revêtement conducteur étant de forme annulaire,
le revêtement conducteur présentant une épaisseur d'anneau *d* et une largeur d'anneau *b*,
**caractérisé en ce que** le tube de mesure (1) présente une longueur *l* et un diamètre nominal *D* avec *D* ≥ *DN300,* avec *b* ≥ *c* - *l* et *0,05* ≤ *c* ≤ *0,25.*

2. Débitmètre selon l'une des revendications précédentes,
pour lequel le revêtement conducteur comprend un polymère conducteur et/ou un métal et/ou un système de peinture et/ou un revêtement en poudre.

3. Débitmètre selon l'une des revendications précédentes,
pour lequel le revêtement conducteur est appliqué sélectivement à l'entrée et à la sortie du tube de mesure (1).

4. Débitmètre selon l'une des revendications précédentes,
pour lequel le revêtement conducteur présente une conductivité S*₁*,
la conductivité *S₁* étant telle que *S₁* ≥ *10⁶ S*/*m,* notamment S*₁* ≥ *5* • *10⁶ S*/*m* et de préférence S*₁* ≥ *10⁷ S*/*m.*

5. Débitmètre selon l'une des revendications précédentes,
pour lequel le tube de mesure (1) comprend un tube conducteur avec un liner (4) ou un revêtement isolant.

6. Débitmètre selon la revendication 5,
pour lequel le revêtement conducteur est appliqué sur le liner (4) ou le revêtement isolant.

7. Débitmètre selon la revendication 6,
pour lequel le tube conducteur n'est que partiellement revêtu par le liner (4) ou le revêtement isolant, le revêtement conducteur étant appliqué sur les zones exposées du tube.

8. Débitmètre selon l'une des revendications 1 à 5,
pour lequel le tube de mesure (1) comprend un tube isolant, notamment un tube en verre ou un tube en céramique, ou de préférence un tube en matière plastique.

9. Débitmètre selon l'une des revendications précédentes,
pour lequel une bride (10) est montée sur chaque côté frontal du tube de mesure (1), le revêtement conducteur s'étendant au moins partiellement sur la bride (10).

10. Débitmètre selon l'une des revendications précédentes,
pour lequel le revêtement conducteur est mis à la masse électrique au moyen d'un câble (9) et/ou d'une tôle et/ou par mise à la terre du tube conducteur.
